# EUROPEAN PATENT APPLICATION

(11) **EP 4 810 445 A1**
(43) Date of publication of application: **23.09.2026**
(21) Application number: 25382272.0
(22) Date of filing: 21.03.2025
(51) Int. Cl.: C01F 7/142

(54) **PROCESS OF OBTENTION OF ALUMINIUM HYDROXIDE**

(71) Applicant: Industrias Quimicas del Ebro, S.A., 50057 Zaragoza (ES)
(72) Inventor: PÉREZ CACHO, Jorge José, 50057 ZARAGOZA (ES); CACHO BAILO, Luis Fernando, 50057 ZARAGOZA (ES); CANO ESCARIO, Miguel, 50057 ZARAGOZA (ES); MENÉNDEZ SASTRE, Miguel, 50009 ZARAGOZA (ES); PEÑA LLORENTE, José Ángel, 50009 ZARAGOZA (ES); MUR MUR, Carlota, 50009 ZARAGOZA (ES)
(74) Representative: Clarke, Modet y Cía., S.L.

(57) **Abstract**

The present invention is a process of obtention of aluminium hydroxide comprising the simultaneous addition of CO₂ and a metal aluminate in a reactor with mechanical stirring and at a constant reaction pH between 7.5 and 9. The procedure lowers the total reaction time and achieves close to 100% conversions to product, also minimizing the formation of crystalline species if desired.

## Description

### TECHNICAL SECTOR

The present invention is of the field of industrial chemistry, specifically relating to the production of amorphous aluminium hydroxide for the subsequent production of aluminium or for uses in medicine, construction or as a sorbent in the chemical industry.

### STATE OF THE ART

The most commonly used process for obtaining aluminium hydroxide is the Bayer method, which is based on crystallization from a sodium aluminate solution using aluminium hydroxide seeds.

Another process described to obtain aluminium hydroxide is the Pedersen process (Nedkvitne E, "Leaching and precipitation Experimental Related to the Pedersen Process", Master Thesis NTNU, 2019) in which the aluminium hydroxide is precipitated from a solution of sodium aluminate using carbon dioxide. Although this process is ancient, there is little information in the literature on the most suitable conditions. In general, it describes bubbling of a gaseous stream of CO₂ in a tank where the solution of sodium aluminate is initially placed.

A variant of the Pedersen process is the Grymek process, which describes the carbonation of a stream containing sodium aluminate, where aluminium hydroxide precipitates. Although it does not specify in detail the form of precipitation, the main objective of the process is to obtain alumina through the calcination of hydroxide (US 4149898 and US 4226632).

Thus, Aghazadeh and Shanyanfar show that bubbling CO₂ in a stirred tank containing sodium aluminate and adding seeds of gibbsite *[γ-[Al(OH)₃*] and bayerite *[α-[Al(OH)₃*] obtained dawsonite *[NaAlCO₃(OH)₂]* in the reaction, an unwanted aluminium and sodium hydroxycarbonate, at pH = 9 or pH = 10. At pH = 11 the predominant phase is aluminium hydroxide, but at this pH aluminium remains unprecipitated. The conversion of Al(OH)₃ is 67% using a seed-to-Al₂O₃ in solution of 0.5, but it has to be much higher to obtain a yield of 96% (Aghazadeh V. and Shayanfar S. "Aluminium Hydroxide Crystallization from Aluminate Solution Using Carbon Dioxide Gas: Effect of pH and Seeding", Mineral Processing and Extractive Metallurgy: Transactions of the Institute of Mining and Metallurgy, 2021, 130(3), 218-224).

To avoid the dawsonite phase it is necessary to work below 30 °C, but under these conditions the amount of aluminium (AI) in the precipitate is less than 70% of the original amount in the solution and the predominant phase is bayerite (Mwase J. M., et al. "Investigating Aluminium Tri-Hydroxide Production from Sodium Aluminate Solutions in the Pedersen Process." Processes 2022, 10(7), 1370; https://doi.org/10.3390/pr10071370).

By studying with mathematical models and empirical measurements the parameters that affect the precipitation of the Al phases from solutions of aluminate with CO₂, it can be observed that thermodynamics favors the formation of dawsonite above 65 °C, and that below 50 °C precipitates gibbsite first, which then carbonates and evolves to dawsonite (Marinos D, et al. "Parameters affecting the precipitation of AI phases form aluminate solutions of the Pedersen process: The effect of carbonate content", Journal of Sustainable Metallurgy 2021, 7(3), 874-882; https://doi.org/10.1007/s40831-021-00403-w). However, in experiments at 40°C it needs 110 minutes of precipitation to achieve a recovery of close to 100% of the aluminium, with the predominant phase being dawsonite and the minority phases bayerite and boehmite [AIOOH] (Marinos D, et al. "Carbonation of sodium aluminate/sodium carbonate solutions for precipitation of alumina hydrates-avoiding dawsonite formation", Crystals, 2021, 11(7), 836; https://doi.org/10.3390/cryst11070836).

In this regard, application US2003/0190281A1 shows a reaction between sodium aluminate and CO₂ at a temperature below 40 °C to obtain an aluminium hydroxide precipitate in gel form. In this application, CO₂ is added for a period of 45 to 60 minutes to a reactor with a paddle agitator containing a Bayer bleach diluted to a final pH value between 11 and 12. As soon as the solution reaches its final pH, the precipitate is recovered.

In summary, the original Pedersen method and variations thereof describe an addition of CO₂ to the sodium aluminate solution resulting in the formation of a gel that later crystallizes with a yield of around 80% conversion.

Besides, it has been described the precipitation of crystalline aluminium hydroxide from potassium aluminate and CO₂ (Liu et al., "Utilization of CO2 as carbon source for preparation of sandy Al(OH)3 in concentrated KAl(OH)4 solutions: a kinetic study." Energy Sources, Part A: Recovery, Utilization and Environmental Effects, 2019, 41(20), 2507-2518; https://doi.org/10.1080/15567036.2019.1568632). In this process, potassium aluminate lies in the reaction bed while CO₂ bubbling lowers the pH to a value of 11, requiring temperatures between 60 and 90 °C.

The French patent FR2520722B1 describes that the use of CO₂ as a precipitating agent in a solution of an alkaline aluminate gives rise to an aluminium hydroxycarbonate. However, it is not described or suggested that aluminium hydroxide could be obtained directly in the precipitate.

CN114506865B describes a process of reacting a solution of an alkali metal with a solution of CO₂ but does not indicate or suggest a procedure that uses CO₂ directly. And in patent CN102452678B carbonation is carried out directly in the saturated solution of sodium aluminate, but the process requires two stages, with a polymeric surfactant being necessary in the second one.

About the formation of dawsonite, it has been concluded that its precipitation is favored in saturated media of NaOH/NaCl/NaHCO₃ especially at a NaHCO₃/Al molar ratio of 3, temperature of 150 °C and in long periods of precipitation or maturation (Álvarez-Ayuso E, et al. "Synthesis of dawsonite: A method to treat the etching waste streams of the aluminium anodising industry", Water Research, 2005, 39(10), 2096-2104; https://doi.org/10.1016/j.watres.2005.03.017).

Other authors such as Bénézeth P. have identified the most favorable conditions for the precipitation of dawsonite and boehmite, with the boehmite phase predominating in a pH range between 2-6 and 11-12, and the precipitation of dawsonite in pH ranges 6 and 11, especially in the presence of bicarbonate (HCO₃⁻ ). (Bénézeth P, et al. "Dawsonite synthesis and reevaluation of this thermodynamic properties from solubility measurements: Implications for mineral trapping of CO2", Geochimica et Cosmochimica Acta, 2007, 71(18), 4438-4455; https://doi.org/10.1016/j.gca.2007.07.003).

The problem of the art is the need for a procedure to obtain aluminium hydroxide from sodium aluminate and CO₂ with improved efficiency. The solution of the present invention is adding sodium aluminate and CO₂ together in a reaction tank at constant pH, maximizing in this way the contact between phases and mass transfer, and optimizing the reaction.

### DESCRIPTION OF THE INVENTION

The present invention is a process for obtaining amorphous aluminium hydroxide of high purity Al(OH)₃ comprising the simultaneous addition of CO₂ and an aqueous solution of metal aluminate, preferably sodium aluminate, in a reaction tank with mechanical stirring, at a constant pH between 7.5 and 9.

The addition of the aluminate solution in a controlled manner allows precipitation to be carried out at constant pH. Outside that pH range, the yield to solid drops down. As made evident, the flow rate will depend on the size of the installation.

In the present application, simultaneous addition is understood to mean the addition of the reactive forms of the compounds at the same time, by separate or joint ducts, to enable the reaction between them as they are added to the reaction tank.

In the present application, mechanical stirring is understood to be any device, internal or external to the reactor, that triggers the movement of the reaction liquid and is capable for achieving complete agitation, typically blades.

In the present application, constant pH is defined as a pH value that may vary under operating conditions in the range of ± 0.5.

In another preferable aspect of the invention, the constant pH has a value of 8 or 8.5.

The invention procedure allows greater homogeneity and favors a high gas-liquid mass transfer to enable the rapid precipitation of Al(OH)₃, reducing reaction times. It is thus possible to multiply the effectiveness of the precipitation process for the same percentage of dry product without modifying the characteristics of the amorphous Al(OH)₃ and obtaining a product yield close to a surprising 100% in all aspects of the invention, without the need to use seeds.

In a preferable aspect of the invention, precipitation is carried out from a solution with an Al₂O₃ content between 5% and 30%, preferably between 19.8% and 24.2%, and an Al₂O₃/Na₂O mass ratio between 1 and 1.5, preferably between 1.20 and 1.24.

In another preferable aspect, the reaction temperature is between 10 °C and 40 °C, between 16 °C and 40 °C, and more preferably between 16 °C and 27 °C or between 19 °C and 26 °C.

In another preferable aspect, the addition of CO₂ is made at a flow rate through a narrowing between 10 m/s and 170 m/s, more preferably between 13 m/s and 168 m/s, between 52 m/s and 154 m/s, and still more preferably between 97 m/s and 154 m/s. After this narrowing, a stream of liquid is injected that can be taken from the reaction tank or directly from the starting metal aluminate solution.

A broader aspect of the invention includes any device of the art that favors a high speed of flow and transfer of matter from the gas phase to the liquid phase, understood as the amount of matter that is transferred per unit of time and unit of volume.

The velocity of the gas in the orifice is determined based on the volumetric flow rate, the cross-section of the orifice, and the associated pressure loss (using Bernoulli's equation). Operational systems with high gas velocities require an installation design capable of withstanding significant pressure losses in the pipes, derived from the pressure drop caused by the friction between the gaseous particles and with the walls. These pressure losses result in energy dissipation that can compromise the efficiency of the system. However, when operating at gas velocities below 170 m/s, pressure losses are kept within permissible levels without negatively affecting the CO₂ performance in the reaction.

The Reynolds numbers calculated in the ejector orifice for the density of the gas-liquid mixture in the proposed dimensions vary approximately between a minimum of 70000 and a maximum of 204300, being preferable to reach Reynolds numbers of 204300 that generate greater turbulence. However, it is important to note that these values may vary when escalating the system. Turbulence phenomena such as those determined by those Reynolds numbers after the CO₂ injection hole improve mass transfer. In addition, turbulence is intensified by the joint action of a static mixer and the mechanical stirring in the reaction tank. All these elements contribute to improving the efficiency of the precipitation process.

So, in a preferable aspect a static mixer is added after the injection of the CO₂ and the input of the liquid stream. In another preferable aspect, the CO₂ flow rate is achieved with one or more Venturi ejectors of any nozzle size depending on the volume of the reactor, which integrate the CO₂ gas with the liquid stream. It is preferable to combine the Venturi ejector(s) with a static mixer at the outlet of the gas-liquid mixture.

In the present application, a static mixer means a device capable of efficiently mixing fluids without moving components. It is typically a tube containing baffles, also typically helical ones, where the energy needed for mixing comes from the pressure loss of the fluids passing through the device. Its operation is based on the division, redirection and remixing of the flow by a series of internal elements with specific geometries, promoting the mixing of the components. Every static mixer described in the art would do the process of the present invention.

The procedure of the present invention significantly favors the dissolution of gaseous CO₂ in the liquid phase, which accelerates the precipitation of Al(OH)₃ and consequently improves the efficiency and productivity of the process without compromising the CO₂ yield with respect to other conventional gas bubbling systems. An advantage of Venturi ejectors is that they avoid the fouling and plugging problems that appear in conventional gas injectors, simplifying manual work.

The controlled addition of the aluminate solution to maintain a constant pH while feeding CO₂ allows a medium of lower viscosity to be maintained, facilitating its processing and allowing the precipitation of the solid in the desired amorphous phase. In a more preferable respect, the CO₂ flow rate is constant.

Another aspect of the invention has to do with minimizing the presence of crystalline species that may be unwanted in the final precipitate, such as dawsonite especially, gibbsite, bayerite and others. The presence of dawsonite and any other crystalline form in the obtained aluminium hydroxide hinders its solubility and limits the use as a pharmaceutical product. It also carries an intrinsic concentration of sodium, which is how its measurement is determined, leading to chemical interactions with excipients or active ingredients, thereby compromising the stability of the final product.

It has been proven that the formation of these species is favored by a high pH as also high reaction time.

To avoid the formation of unwanted crystalline species, the invention procedure is preferably performed at a CO₂ flow rate of between 97 and 154 m/s, incorporating a static mixer, and the reaction takes place at a constant pH of 8 or 8.5 and a temperature of 16-27 °C.

Under these conditions, the best inhibition of these crystalline species is achieved due again to the optimization of the intimate gas-liquid contact, which reduces the CO₂ gradients in the reaction liquid responsible for areas of high concentration of carbonates that in turn favor the formation of dawsonite.

In another preferable respect, the container where the precipitation is made is closed, leaving an outlet for the recirculation of the CO₂ that has not reacted, so that the atmosphere above the solution is rich in said CO₂. It has been proven that on some occasions this facilitates its dissolution. In any case, in an even more preferable aspect, the CO₂ left over from the reaction is recirculated to the reactor for a total gas conversion.

In another preferable aspect, the obtained precipitate is washed, filtered and dried according to usual methods described in the state of the art. For instance, it can be dried in a spray dryer or in jet-flash (spin-flash). In a preferable aspect, the washing is done with water or with a slightly acidulated solution to reduce the salt content.

The amorphous Al(OH)₃ product obtained by this procedure has a minimum concentration of free sodium as shown by the conductivity data, ICP-OES, and the percentage of aluminium (% Al₂O₃) of the samples.

In another preferable aspect, the invention process can be used in the recycling of sodium aluminate compounds using mixtures of gases that, in addition to CO₂, contain other gases, as is the case of the chimney gas streams obtained in the combustion of various fossil fuels.

Another preferable aspect of the invention is the use of Al(OH)₃ obtained by the process of the invention in the pharmaceutical industry. Yet another preferable aspect is its use as a sorbent in the chemical industry. Another preferable aspect is as an additive in construction.

### BRIEF DESCRIPTION OF THE FIGURES

**Figure 1** shows the Fourier Transform Infrared (FTIR) spectrum of the solid obtained in Example 1. The characteristic stretching bands to be analyzed in the spectrum are the O-H stretching vibration band (around 3000 cm⁻¹) and the symmetrical and asymmetrical carbonate ( ${CO}_{3}^{2 -}$) stretching vibration bands (around 1500 cm⁻¹). With these, the possible presence of crystalline phases of aluminium hydroxide can be detected, mainly the presence of dawsonite from the presence of the carbonate bond. These conclusions are consistent with Figure 2 and the results shown in Example 1.
**Figure 2** shows the X-ray diffraction (XRD) diffractogram of the solid obtained in Example 1. In this phase, the presence of crystalline phases such as boehmite (▲) and dawsonite (•) is confirmed, based on the signals detected in the XRD. It should be noted that the signal associated with these phases is not very prominent, indicating that it is a minority compound.

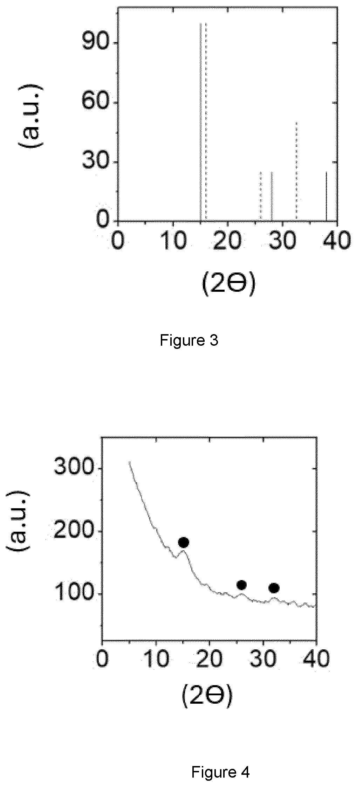

**Figure 3** shows the most characteristic pattern signals of dawsonite (---) and boehmite (-) in an XRD diffractogram. The most prominent and representative signal to determine the presence of dawsonite is located at 2Θ = 15.7.
**Figure 4** shows the XRD of the solid obtained in the precipitation described in Example 2 and as observed, dawsonite is present. In particular, a characteristic signal 2Θ = 15.7 of dawsonite is observed corresponding to a distinctive crystalline plane of this phase.

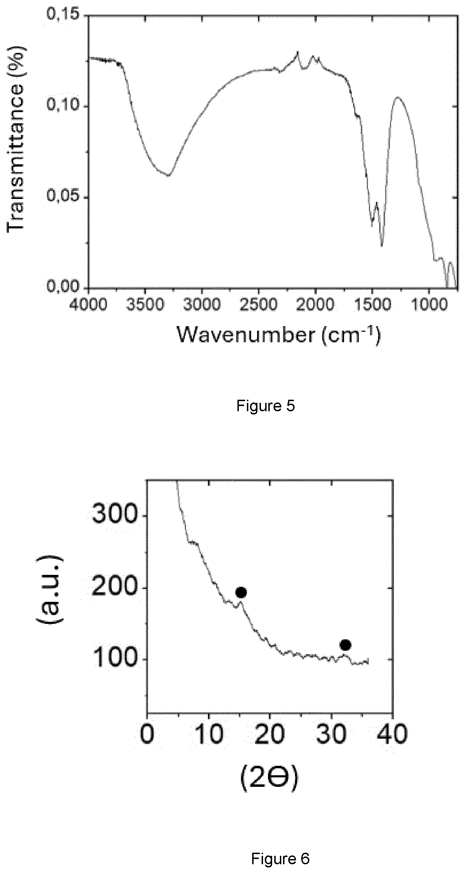

**Figure 5** shows the FTIR of the solid obtained in Example 2 and as can be seen, the signal around 3000 cm⁻¹ indicates the presence of a crystalline phase with an O-H bond. Besides, bands around 1500 cm⁻¹ demonstrate the presence of the carbonate bond containing dawsonite.
**Figure 6** shows the XRD of the precipitated solid described in Example 4. It is consistent with the values obtained in Example 4, since it hardly presents dawsonite in the solid.
**Figure 7** shows the FTIR of the solid obtained according to Example 4. This spectrum confirms the conclusions of Figure 6, where dawsonite hardly appears in the solid. As can be seen, the peak of the O-H bond signal is smoother, and the presence of the carbonate bond is less pronounced.
**Figure 8** shows the XRD of the solid obtained according to Example 5. As can be seen, the solid is totally amorphous and no crystalline impurities appear.
**Figure 9** shows the FTIR of the precipitated solid described in Example 5. This spectrum confirms the conclusions of Figure 8, showing that the solid does not contain crystalline species. However, it reveals the possible presence of amorphous impurities, such as sodium bicarbonate, a species that can form in the reaction medium and precipitate at saturation points of the Al(OH)₃ structure. Despite this, sodium bicarbonate is a watersoluble species, and its percentage can be reduced by increasing the number of washes and filtrations.
**Figure 10** shows the XRD of the precipitated solid in Example 6, where a more prominent signal can be seen at 2Θ =15.7, associated with dawsonite.

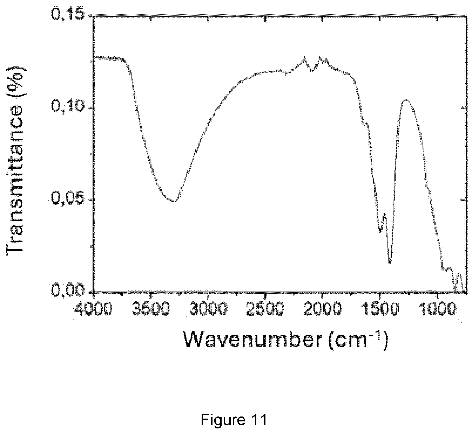

**Figure 11** shows the FTIR of the obtained solid described in Example 6. The same presence of the defined O-H bond and the two bands corresponding to the carbonate bond resonance can be observed. These results are consistent with those presented in Example 5.

### EXAMPLES

The conditions and results of the examples below are shown schematically in Table 1.

**Table 1:**

| **E.g.** | | **reaction time** | **T °C** | **Reynolds/ V gas** | **ppm Na⁺** | **% product yield** |
|---|---|---|---|---|---|---|
| **1** | **Pedersen** | 105 min | 40 | | 30959 | 80 |
| **2** | **Stirred Tank** | 69 min | 40 | | 28585 | 100 |
| **3** | **Stirred Tank II** | 74 min | 16-26 | | 20206 | 100 |
| **4** | **Venturi Z5 + Mixer CO₂ 2.5 L/min** | 46 min | 40 | Re=204259 | 18049 | 100 |
| | | | | V= 154 m/s | | |
| **5** | **Venturi Z5 + Mixer CO₂ 2.5 L/min** | 48 min | 16-27 | Re=204259 | 14492 | 100 |
| | | | | V= 154 m/s | | |
| **6** | **Venturi Z5 pH= 8 CO₂ 2.5 L/min** | 48 min | 40 | Re=204259 | 26829 | 100 |
| | | | | V= 154 m/s | | |
| **7** | **Venturi Z10 pH= 8 CO₂ 2.5 L/min** | 52 min | 40 | Re=137876 | 26534 | 97 |
| | | | | V= 52 m/s | | |
| **8** | **Venturi Z20 pH= 9 CO₂ 2.5 L/min** | 38 min | 40 | Re=70480 | 30539 | 100 |
| | | | | V= 13 m/s | | |
| **9** | **Venturi Z20 pH= 8.5 CO₂ 2.5 L/min** | 44 min | 40 | Re=70480 | 26227 | 100 |
| | | | | V= 13 m/s | | |
| **10** | **Venturi Z20 pH= 8 CO₂ 2.5 L/min** | 46 min | 40 | Re=70480 | 26605 | 99 |
| | | | | V= 13 m/s | | |
| **11** | **Venturi Z20 pH= 7.5 CO₂ 2.5 L/min** | 121 min | 40 | Re=70480 | 32511 | 97 |
| | | | | V= 13 m/s | | |
| **12** | **Venturi Z10 + Mixer pH=8 CO₂ 2.5 L/min** | 46 min | 40 | Re=137876 | 21903 | 96 |
| | | | | V= 52 m/s | | |
| **13** | **Venturi Z10 + Mixer pH=8 CO₂ 5 L/min** | 31min | 40 | D=143523 | 18324 | 99 |
| | | | | V= 97 m/s | | |
| **14** | **Venturi Z5 + Mixer pH=8 CO₂ 5 L/min** | 35 min | 40 | Re=124344 | 20560 | 100 |
| | | | | V= 168 m/s | | |
| **15** | **Venturi Z20 + Mixer pH=8.5 Two streams (90/10) CO₂ 10 L/min** | 530 min | 19-25 | Re=85329 | 45343 | 100 |
| | | | | V= 52 m/s | | |
| **16** | **Venturi Z20 + Mixer pH=8.5 Two streams (80/20) CO₂ 10 L/min** | 253 min | 20-26 | Re=85329 | 32291 | 100 |
| | | | | V= 52 m/s | | |

| | | | | | | |
|---|---|---|---|---|---|---|
| * "% Yield" corresponds to the percentage of Product Yield. | | | | | | |

### Example 1: Control procedure, Pedersen method

The experimental system consisted of a thermostatized 5-litre tank with a 4-blade propeller agitator and a pH probe. In the bed of the reactor were added 0.5 kg of sodium aluminate, with an Al₂O₃/Na₂O ratio = 1.23 by weight and 3 kg of distilled H₂O. The mixture was stirred at 600 rpm, heated up to 40 °C and once the temperature was reached, pure CO₂ bubbled up at a constant flow rate of 1.5 L/min. The used CO₂ injector was a device with two gas outlets, with two holes of 1 mm diameter each. The pH progressively decreased from 12.75 to 8.00 for 105 minutes, when the precipitation of aluminium hydroxide was completed. The suspended solid was then filtered from the reactor bed using a funnel Büchner of 26 cm in diameter, and was repeatedly washed until the conductivity of the wash water was less than 500 µS/cm. The resulting cake was dried in an oven at 40 °C for 15 hours. The solid was crushed in a mortar and the obtained powder was characterized. The properties of the resulting solid are detailed in Table 2: Characterization of the solid obtained in Example 1:

**Table 2: Characterization of the solid obtained in Example 1**

| | Al(OH)₃ (s) |
|---|---|
| BET Area (m²/g) | 206 |
| *Al₂O₃* % | 49 |
| Na⁺ (ppm) | 30959 |
| pH (10%) | 9.43 |
| Conductivity (10%) (µS/cm) | 657 |

Table 2: Characterization of the solid obtained in Example 1 specifies the values obtained from the product. The specific surface area (BET Area) has been calculated using the low-temperature nitrogen molecule adsorption technique. Besides, the percentage of *Al₂O₃* (Al₂O₃%) has been determined through a product retracement assessment with EDTA, ZnSO₄ and dithizone as an indicator. The concentration of Na⁺ and Al³⁺ was quantified by Inductively Coupled Plasma Optical Emission Spectrometry (ICP-OES) of both the solid and the obtained filtered waters. Finally, the pH and conductivity of the solid in aqueous suspension at 10% by weight were analyzed.

This precipitation is of the discontinuous or batch type, and given the initial concentration of the total reactants, a final percentage of dry product of 6% of Al(OH)₃ by weight was generated.

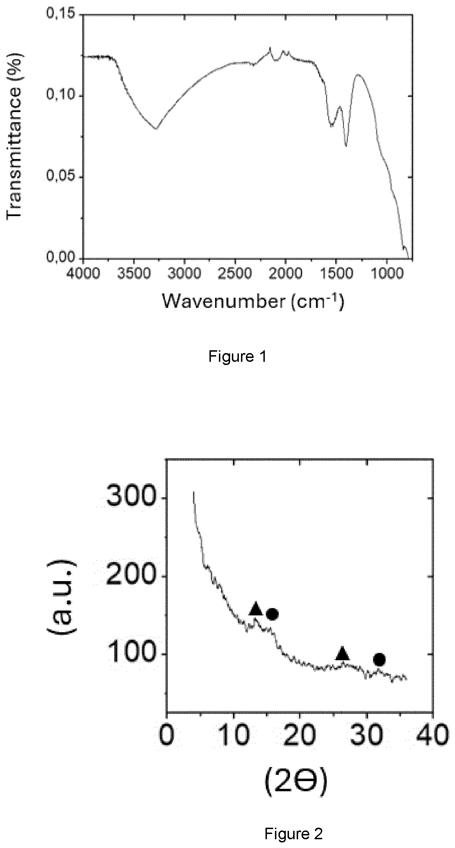

The results show that when reproducing the Pedersen method with the proposed experimental system, the solid presents 3.1% sodium associated with the presence of dawsonite. This fact was confirmed with an X-ray diffraction (XRD) analysis using a dawsonite pattern, finding that the obtained precipitated aluminium hydroxide is amorphous (Figure 1). It was also analyzed by Fourier transform infrared spectroscopy (FTIR) (Figure 2) and as can be seen, the vibration corresponding to the O-H stretching vibration band (3280 cm⁻¹) is more defined, indicating the possible presence of crystalline phases.

The main chemical reaction that occurs in the precipitation of aluminium hydroxide with CO₂ at pH = 8 is shown in Reaction 1. The CO₂ yield and yield to product are calculated according to the stoichiometry of Reaction 1:

*Reaction 1:* *Na*₂*O* · 1.23 *Al*₂*O*₃ + 2 *CO*₂ + 5.71 *H*₂*O* → *2 NaHCO*₃ *+* 2.46 *Al*(*OH*)₃ + 1.02 *H₂O*

It was determined that the CO₂ yield was 40%, while the reaction yield to the product reached 80%. The CO₂ yield is defined as the CO₂ needed according to the stoichiometry of Reaction 1 divided by the actual CO₂ used in precipitation. The yield to product is defined as the mass of obtained product divided by the mass that should be formed with the aluminium present in the feed, according to Reaction 1. The analysis of the solution of the first filtrate of the suspension confirmed the presence of Al³⁺ in the filtrate water, which is consistent with the expected results according to the product yield.

### Example 2: Stirred Tank Procedure

In a 5-litre tank, 2 kg of distilled water was added and brought to 40 °C with constant stirring of 600 rpm. Once the desired temperature was reached, CO₂ was bubbled to the reaction bed through the device described in Example 1 (two gas outlet holes with a diameter of 1 mm), with a constant flow rate of 1.5 L/min, previously optimized for this experimental system. At the same time, a solution of sodium aluminate with an Al₂O₃/Na₂O weight ratio of 1.23 was added to the reactor bed, adjusting its flow rate variably to maintain a pH of 8 in the reaction. A total of 0.5 kg of sodium aluminate was added together with 1 kg of water for 69 minutes, with 6% of the obtained dry product being 6% of the total mass in the reactor at the end of the reaction. The obtained Al(OH)₃ suspension was filtered and washed through a Büchner funnel to a conductivity in the wash water of less than 500 µS/cm. The obtained cake was dried in an oven at 40 °C for 15 hours.

The obtained material has the following properties (Table 3: Characterization of the solid obtained in Example 2):

**Table 3: Characterization of the solid obtained in Example 2**

| | Al(OH)₃ (s) |
|---|---|
| BET Area (m²/g) | 149 |
| *Al₂O₃* % | 48 |
| Na⁺ (ppm) | 28585 |
| pH (10%) | 9.60 |
| Conductivity (10%) (µS/cm) | 1193 |

According to the results presented in this table, the solid contains 28,585 ppm of Na⁺, suggesting the presence of dawsonite, subsequently confirmed by X-ray diffraction (XRD) analysis (Figure 1). The implementation of a controlled precipitation process, with a constant flow of CO₂ and the addition of a dilute stream of sodium aluminate at variable flow, allowed to significantly reduce the proportion of dawsonite in the solid compared to the conventional method described in Example 1. In addition, a decrease in precipitation time to 69 minutes was observed, resulting in a CO₂ yield of 63% (calculated based on Reaction 1). As for the product yield, this was close to 100% and the presence of Al³⁺ was not detected in the first filtering waters.

### Example 3: Stirred Tank Procedure II

In a 5-litre tank, 2 kg of distilled water was added under constant stirring at 600 rpm. A fixed temperature was not established, and the temperature of the reaction was allowed to evolve naturally, measuring it every 10 minutes until the end of precipitation. A solution of variable flow sodium aluminate, prepared with 0.5 kg of Al₂O₃/Na₂O (R_{wt=} 1.23) and 1 L of distilled water until a pH = 8 precipitation was reached. At the same time, pure CO₂ was bubbled with a constant flow rate of 1.5 L/min using the device described in Example 1. The precipitation was considered finished when the addition of the sodium aluminate solution was completed while maintaining the pH at 8, which occurred after 74 minutes. The temperature of the system was monitored throughout the process without a specific setpoint, increasing from 15.56 °C to 26.11 °C due to the exothermic nature of the reaction. The resulting solid was filtered and washed using a Büchner funnel until the conductivity of the wash water was less than of 500 µS/cm. Finally, the obtained cake was dried in an oven at 40 °C for 15 hours.

**Table 4: Characterization of the solid obtained in Example 3**

| | Al(OH)₃ (s) |
|---|---|
| BET Area (m²/g) | 220 |
| *Al₂O₃* % | 49 |
| Na⁺ (ppm) | 20206 |
| pH (10%) | 9.13 |
| Conductivity (10%) (µS/cm) | 217 |

As observed, a decrease in the reaction temperature hinders the formation of dawsonite, reflected in a lower concentration of sodium in the solid. The CO₂ yield is 56%, which was slightly lower than that obtained in Example 2; this could be attributed to the fact that reaction kinetics are slower at lower temperatures - despite, from a thermodynamic approach, that CO₂ is more soluble when cold. Besides this, the yield to product was close to 100%.

### Example 4: Procedure with Venturi Ejector and Static Mixer I

Precipitation was carried out in a 5-litre tank, where 2 kg of distilled water was added and heated to 40 °C with constant stirring of 600 rpm. Once the desired temperature was reached, CO₂ was injected with a constant flow rate of 2.5 L/min through a Venturi Z5 ejector (narrowing with a 0.5 mm hole), where the gas was mixed with the reaction bed suspension recirculated through a peristaltic pump with a flow rate of 116 mL/min. The calculated Reynolds number for flow through the ejector orifice is 204259. This value indicates that the system operates in a completely turbulent regime considering the properties of the fluid, the geometry of the orifice, and the velocity of the flow at that specific point. Fluid density is calculated as a weighted density between the liquid and gas, based on the gas flow rates and the recirculation flow rate of the recirculation tank. In terms of dynamic viscosity, Einstein's approach is used for fluids with suspended particles. The mixture, after leaving the Venturi ejector, passed through a static mixer that guarantees the correct homogenization of the components before flowing into the reaction tank. The added CO₂ flow rate has been optimized for this system, adjusted in a way that maximizes CO₂ yield without compromising reaction efficiency. At the same time, a variable flow rate of a solution of sodium aluminate of Al₂O₃/Na₂O ratio R_{wt} = 1.23 was added to the reaction bed, thus achieving a precipitation at pH = 8. A total of 0.5 kg of sodium aluminate and 1 kg of water were fed for 46 minutes. After the precipitation of Al(OH)₃ was completed, it was filtered and washed through a Büchner funnel until the conductivity of the wash water was less than 500 µS/cm. The obtained product was dried at 40 °C in an oven for 15 hours.

**Table 5: Characterization of the solid obtained in Example 4**

| | Al(OH)₃ (s) |
|---|---|
| BET Area (m²/g) | 168 |
| *Al₂O₃* % | 48 |
| Na⁺ (ppm) | 18049 |
| pH (10%) | 8.90 |
| Conductivity (10%) (µS/cm) | 1016 |

The obtained solid was characterized in the same way and with the same techniques described in Example 1. As can be seen, the concentration of Na⁺ decreases considerably, even if precipitation occurs at 40 °C. The CO₂ yield was 55% and the yield to product was close to 100%. The almost null amount of crystalline species was corroborated by XRD and FTIR (Figure 1 and Figure 2).

### Example 5: Procedure with Venturi Ejector and Static Mixer II

In a 5-litre tank, 2 litres of distilled water were added while maintaining a stirring of 600 rpm. Pure CO₂ with a flow rate of 2.5 L/min was then introduced through the Z5 device described in Example 4, together with the recirculation of the reactor mixture at a rate of 116 mL/min. Simultaneously, an alkaline mixture of sodium aluminate was added to the reaction tank for 48 minutes, with a variable flow rate adjusting the pH to 8. The temperature of the system increased progressively during precipitation from 16 °C to 27 °C. The used sodium aluminate had an Al₂O₃/Na₂O weight ratio of 1.23. Precipitation was completed after the total addition of 0.5 kg of sodium aluminate and 1 kg of distilled water. The resulting dispersion was filtered and washed with distilled water through a Büchner funnel until the conductivity of the filtered water was less than 500 µS/cm, as described in Example 4. Finally, the obtained wet solid was dried in an oven at 40 °C for 15 hours.

**Table 6: Characterization of the solid obtained in Example 5**

| | Al(OH)₃ (s) |
|---|---|
| BET Area (m²/g) | 144 |
| *Al₂O₃* % | 50 |
| Na⁺ (ppm) | 14492 |
| pH (10%) | 9.40 |
| Conductivity (10%) (µS/cm) | 818 |

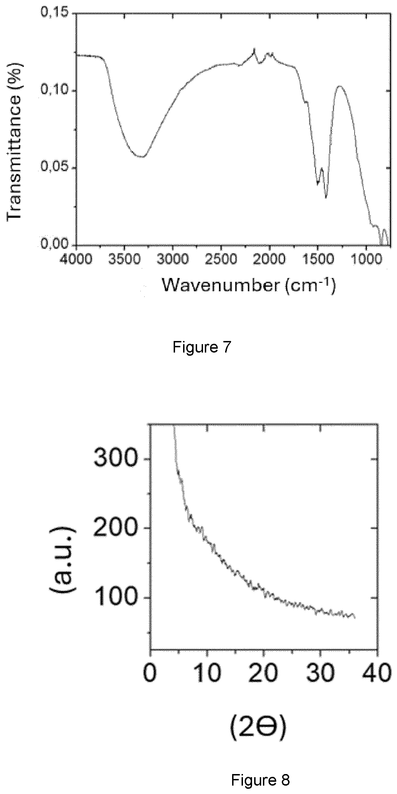

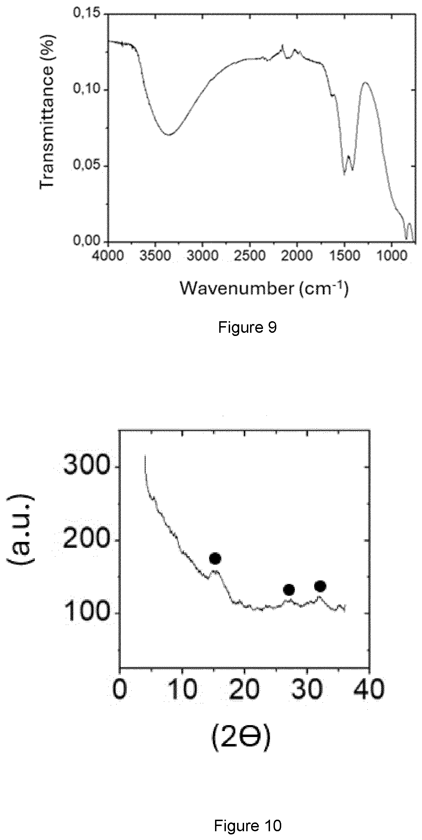

The yield of the reaction was 95% and the CO₂ yield was 55%. The results of the solid characterized in Example 5 are presented in Table 6. As can be seen, the purity of the product increases as less sodium is obtained in the solid. The other values remain within the expected limits and as can be seen the percentage of Al₂O₃ is 50%. And as shown in Figure 8 and Figure 9, there is no dawsonite.

As in Example 3, precipitation presents a temperature increase of approximately 10 °C. And the fact that precipitation lasts 2 minutes longer than in Example 4 reaffirms the conclusions of slow-reaction kinetics exposed in Example 3.

### Example 6: Venturi Ejector Procedure Without Static Mixer I

In a 5-litre tank, 2 kg of distilled water were added and heated to 40 °C, maintaining a continuous stirring of 600 rpm. Upon reaching the desired temperature, the reaction bed solution was introduced to the Venturi Z5 ejector (orifice diameter of 0.5 mm) with a flow rate of 116 mL/min together with the pure CO₂ with a constant flow rate of 2.5 L/min, without using the static mixer. The flow generated in the ejector orifice corresponds to a turbulent regime characterized by a Reynolds number of 204259. At the same time, a solution of sodium aluminate with an Al₂O₃/Na₂O weight ratio of 1.23 was added to the reaction tank with a variable flow rate, with the aim of maintaining a pH = 8 throughout the reaction. In total, 0.5 kg of sodium aluminate and 1 kg of water were incorporated, completing the precipitation in 48 minutes.

The resulting suspension was filtered and washed until the conductivity of the wash water was less than 500 µS/cm; and the wet solid was dried in an oven at 40 °C for 15 hours.

**Table 7: Characterization of the solid obtained in Example 6**

| | Al(OH)₃ (s) |
|---|---|
| BET Area (m²/g) | 220 |
| *Al₂O₃* % | 42 |
| Na⁺ (ppm) | 26829 |
| pH (10%) | 8.69 |
| Conductivity (10%) (µS/cm) | 1482 |

The CO₂ yield was 52% and the yield to product was close to 100%. According to the results of Table 7, decoupling the static mixer is a precipitation option by which the resulting solid has a lower percentage of dawsonite than with the conventional method shown in Example 1, but it forms more dawsonite than in Example 4, where the static mixer was used. It also decreases the reaction time compared to Example 2, where the gas is simply bubbled.

### Example 7: Venturi Ejector Procedure Without Static Mixer II

In a 5-litre tank, 2 kg of distilled water was added and heated to 40 °C, maintaining a continuous stirring of 600 rpm. Once the desired temperature was reached, the reaction bed solution with a flow rate of 116 mL/min was introduced to the Venturi Ejector Z10 (narrowing with 1 mm hole) through which pure CO₂ flows with a constant flow rate of 2.5 L/min. In this case the static mixer is not used, so the mixture flows through the duct to the reaction tank as in Example 6. At the same time, a solution of sodium aluminate, with a weight ratio of 1.23, with a variable flow rate, was added to the tank in order to maintain a constant pH = 8 in the reaction tank. The precipitation lasted a total of 52 minutes, in which 0.5 kg of sodium aluminate and 1 kg of distilled water were added. The obtained dispersion was filtered and washed until the conductivity of the wash water was less than 500 µS/cm, and the wet solid was dried in an oven at 40 °C for 15 hours.

**Table 8: Characterization of the solid obtained in Example 7**

| | Al(OH)₃ (s) |
|---|---|
| BET Area (m²/g) | 152 |
| *Al₂O₃* % | 49 |
| Na⁺ (ppm) | 26534 |
| pH (10%) | 9.18 |
| Conductivity (10%) (µS/cm) | 864 |

The yield to product was 97% and the CO₂ yield was 48%. The data obtained from the characterization of the precipitated solid as described is shown in Table 8. The results do not present a major improvement compared to those obtained in Example 6 but show another possibility of using the Z10 ejector.

### Example 8: Venturi Ejector Procedure Without Static Mixer III

Following the previous examples, the precipitation was carried out in a 5-litre tank in which 2 kg of distilled water were added with constant stirring of 600 rpm and heated to 40 °C. Once that temperature was reached, CO₂ was introduced at a constant flow rate of 2.5 L/min through the Z20 ejector (an orifice diameter of 2 mm), together with the recirculated reaction tank mixture with a fixed flow rate of 116 mL/min. Under these conditions, the Reynolds number in the ejector orifice is 70480, which has been determined based on the properties of the fluid, the geometry of the orifice, and the velocity of the flow at that specific point, as described above. At the same time, a solution of sodium aluminate (R_{wt} = 1.23) was introduced with a variable flow rate until pH = 9 was achieved. A total of 0.5 kg of sodium aluminate and 1 kg of distilled water were added during precipitation for 38 minutes. Once the precipitation of amorphous Al(OH)₃ was finished, it was filtered, washed with distilled water and dried in the same way as the previous ones.

**Table 9: Characterization of the solid obtained in Example 8**

| | Al(OH)₃ (s) |
|---|---|
| BET Area (m²/g) | 177 |
| *Al₂O₃* % | 47 |
| Na⁺ (ppm) | 30539 |
| pH (10%) | 9.07 |
| Conductivity (10%) (µS/cm) | 1194 |

This precipitation reached a CO₂ yield of 66% in 38 minutes of reaction. The sodium concentration increased compared to Example 4; despite that it does not reach the value obtained in Example 1 (conventional precipitation in a stirred tank) where the CO₂ yield was 40% in a reaction time of 105 minutes. In addition, the yield to product is 100% and it was observed that it is possible to perform precipitation even at pH = 9 without reaching the rates of Na⁺ observed in Example 1.

### Example 9: Venturi Ejector Procedure Without Static IV Mixer

2 litres of distilled water were added to a 5-litre tank and heated to 40 °C at constant stirring rate of 600 rpm. Once the setpoint temperature was reached, pure CO₂ with a flow rate of 2.5 L/min was introduced through the new device (Z20) described in Example 8, together with the recirculated reactor mixture with a flow rate of 116 mL/min. In turn, the alkaline mixture of sodium aluminate was added to the tank with a variable flow rate, adjusting the pH to 8.5 for 44 minutes. The used sodium aluminate had an Al₂O₃/Na₂O ratio by weight of 1.23. Precipitation was completed after adding a total of 0.5 kg of sodium aluminate and 1 kg of water in the total precipitation time. The resulting dispersion was filtered and washed using distilled water through a Büchner funnel until the filter water resulted with a conductivity of less than 500 µS/cm. Finally, the wet solid was dried in the oven at 40 °C for 15 hours.

**Table 10: Characterization of the solid obtained in Example 9**

| | Al(OH)₃ (s) |
|---|---|
| BET Area (m²/g) | 172 |
| *Al₂O₃* % | 47 |
| Na⁺ (ppm) | 26227 |
| pH (10%) | 8.86 |
| Conductivity (10%) (µS/cm) | 160 |

The solid was characterized following the procedure described in Example 1, and the results are presented in Table 10. The yields calculated according to Reaction 1 were 57% for the CO₂ and approximately 100% for the final product.

The obtained solid had a concentration of 2.6% of Na⁺, which indicates the presence of dawsonite, which was confirmed by the XRD analysis. The lower Na⁺ content and reduced precipitation time, even at a pH of 8.5, compared to Examples 1 and 2, highlight the feasibility of precipitating aluminium hydroxide under these conditions.

### Example 10: Venturi Ejector Procedure Without Static Mixer V

In a 5-litre tank, 2 kg of distilled water were added and heated to 40 °C maintaining constant stirring of 600 rpm. Once the desired temperature was reached, pure CO₂ was introduced through the new device (Z20) described in Examples 8 and 9 with a constant flow rate of 2.5 L/min. At the same time, the reaction bed is recirculated with a flow rate of 116 mL/min to the new device for mixing. A solution of sodium aluminate with a weight ratio of Al₂O₃/Na₂O of 1.23 with a variable flow rate adjusting the precipitation pH to 8. A total of 0.5 kg of sodium aluminate and 1 kg of distilled water were added during precipitation in 46 minutes. The resulting aluminium hydroxide was filtered and washed repeatedly until the conductivity of the wash water was less than 500 µS/cm. It was then dried in an oven at 40 °C for 15 hours. Finally, it was ground and characterized according to Example 1. The results are shown in the Table 11: Characterization of the solid obtained in Example 10.

**Table 11: Characterization of the solid obtained in Example 10**

| | Al(OH)₃ (s) |
|---|---|
| BET Area (m²/g) | 155 |
| *Al₂O₃* % | 47 |
| Na⁺ (ppm) | 26605 |
| pH (10%) | 8.95 |
| Conductivity (10%) (µS/cm) | 184 |

According to calculations based on Reaction 1, a yield of 54% for CO₂ and 99% for the final product was achieved. The percentage of sodium in the solid compared to those obtained in Examples 1 and 2 is lower and the precipitation time is shorter. However, the absence of the static mixer and the increase in the size of the device orifice (Z20) favor the precipitation of dawsonite (presence confirmed by XRD).

### Example 11: Venturi Ejector Procedure Without Static Mixer VI

2 liters of distilled water were added to a 5-litre tank with a mechanical stirring of 600 rpm and heated up to 40 °C. Once the precipitation temperature was reached, CO₂ was injected with a flow rate of 2.5 L/min through the new device (Z20) while the reaction mixture of the reactor with a flow rate of 116 mL/min was recirculated to the ejector. A solution of sodium aluminate composed of 0.5 kg of sodium aluminate was added to the reaction tank (R_{wt} = 1.23) and 1 kg of water with a variable flow that depends on the pH of precipitation, in this case pH = 7.5. Precipitation ended at 121 minutes. The dispersion was filtered and washed consecutively until the conductivity of the wash water was less than 500 µS/cm. Finally, the obtained solid was dried and characterized following Example 1. The results are shown in Table 12.

**Table 12: Characterization of the solid obtained in Example 11**

| | Al(OH)*₃* (s) |
|---|---|
| BET Area (m²/g) | 163 |
| *Al₂O₃* % | 50 |
| Na⁺ (ppm) | 32511 |
| pH (10%) | 8.88 |
| Conductivity (10%) (µS/cm) | 178 |

Lowering the reaction pH makes it difficult for CO₂ to dissolve as a result of its chemical equilibrium and consequently precipitation takes almost three times longer at this pH than at pH= 8 (Example 10). The CO₂ yield (calculated according to Reaction 1) is 21% and the product yield is 97%.

Dawsonite formation is favored by the prolonged precipitation time, even though it is not as favored from the pH point of view.

### Example 12: Procedure with Venturi Ejector and Static Mixer III

2 litres of distilled water were added to a 5-litre tank with constant stirring of 600 rpm and the reactor was heated to 40 °C. When the desired temperature was reached, the CO₂ injection was started via the new device (Z10, hole size 1 mm) with a constant flow rate of 2.5 L/min followed by the static mixer. The reaction bed was also recirculated to the new device with a constant flow rate of 116 mL/min and mixed with the gas stream. A Reynolds number of 137876 has been obtained for the calculation of the flow rate through the orifice; This result confirms that the system is in a fully turbulent regime, taking into account the characteristics of the fluid, the geometric configuration of the orifice and the velocity of the flow in that region. The precipitation pH is 8 and was regulated with the addition of a solution of sodium aluminate composed of 0.5 kg of aluminate of the Al₂O₃/Na₂O ratio by weight of 1.23 and 1 kg of distilled water. Precipitation ended when the sodium aluminate solution was exhausted after 46 minutes, obtaining a CO₂ yield of 54% and the yield to product is 96%. The resulting suspension was filtered and washed though a Büchner funnel with water until the conductivity of the mother liquor was less than 500 µS/cm. The resulting cake was dried for 15 hours at 40 °C before proceeding to its subsequent characterization.

**Table 13: Characterization of the solid obtained in Example 12**

| | Al(OH)₃ (s) |
|---|---|
| BET Area (m²/g) | 159 |
| *Al₂O₃* % | 48 |
| Na⁺ (ppm) | 21903 |
| pH (10%) | 9.06 |
| Conductivity (10%) (µS/cm) | 171 |

The low percentage of sodium in the solid showed that another type of ejector (Z10) can be used together with the mixer for the precipitation of amorphous aluminium hydroxide, with an acceptable CO₂ yield, if we compare it with Example 7. Nevertheless, the configuration obtained in Example 4 with Z5 is preferable, providing greater turbulence that favors the non-precipitation of dawsonite.

### Example 13: Procedure with Venturi Ejector and Static Mixer IV

In a 5-litre tank, 2 kg of distilled water was added and heated to 40 °C, maintaining constant stirring of 600 rpm. Once the desired temperature was reached, CO₂ was introduced with the new Z10 device, described in Examples 4 and 10 with a constant flow rate in excess of 5 L/min, together with the reaction bed mixture with a flow rate of 116 mL/min. The flow through the orifice has a Reynolds number of 143523, confirming that it is within the turbulent regime. To do this, the velocity of the flow in that region, the characteristics of the fluid and the geometric configuration of the orifice have been taken into account. At the same time, with a variable flow rate, a solution of sodium aluminate with a weight ratio of 1.23 was added to achieve a pH of 8 in the reaction. A total of 0.5 kg of sodium aluminate and 1 kg of water were added to the end of the precipitation, which lasted 31 minutes. The obtained Al(OH)₃ suspension was filtered until the conductivity of the wash water was less than 500 µS/cm. The resulting cake was dried in an oven at 40 °C for 15 hours.

**Table 14: Characterization of the solid obtained in Example 13**

| | Al(OH)₃ (s) |
|---|---|
| BET Area (m²/g) | 149 |
| *Al₂O₃* % | 50 |
| Na⁺ (ppm) | 18324 |
| pH (10%) | 8.89 |
| Conductivity (10%) (µS/cm) | 781 |

Similar to the previous examples, at this precipitation 6% by weight of dry product was obtained with respect to the total mass in the reactor, achieving a product efficiency of 99% in a reaction time of 31 minutes. Likewise, the reaction time was reduced by almost half compared to the precipitation of Example 2 with the CO₂ bubbler, and with respect to the control precipitation according to the Pedersen method (Example 1) the time is reduced by up to 3.4 times. And the CO₂ yield was 40%, only 14% lower than Example 12.

### Example 14: Procedure with Venturi Ejector and Static Mixer V

Precipitation was carried out in a 5-litre tank, to which 2 kg of distilled water were added and heated to 40 °C, maintaining constant stirring of 600 rpm. Once the desired temperature was reached, CO₂ was injected with a constant flow rate of 5 L/min along with the dispersion of the reaction bed with a flow rate of 116 mL/min through a Venturi model Z5 ejector, followed by a static mixer. The flow through the ejector orifice has a Reynolds number of 124344. Simultaneously, a solution of sodium aluminate with a weight ratio Al₂O₃/Na₂O = 1.23 was fed to the reaction bed, adjusting the pH to 8. For 35 minutes, 0.5 kg of sodium aluminate and 1 kg of water were fed. After the precipitation of Al(OH)₃, the product was filtered through a Büchner funnel until the conductivity of the washing water was less than 500 µS/cm. The obtained solid was then dried in an oven at 40 °C for 15 hours.

**Table 15: Characterization of the solid obtained in Example 14**

| | Al(OH)₃ (s) |
|---|---|
| BET Area (m²/g) | 163 |
| *Al₂O₃* % | 50 |
| Na⁺ (ppm) | 20560 |
| pH (10%) | 8.95 |
| Conductivity (10%) (µS/cm) | 580 |

The obtained solid was characterized as shown in Example 1 and the results are shown in Table 15. Precipitation has a CO₂ yield of 38% and the yield to product is 100%.

### Example 15: Venturi Ejector and Static Mixer VI Procedure

2 liters of distilled water were added to a 5-litre tank and the mixture was brought to 20 °C without thermal control and with constant stirring of 600 rpm. Unlike the previous cases, this time two gas streams were mixed at the inlet of the device: the total inlet has a composition of 90% compressed air (stream 1) and 10% pure CO₂ (stream 2), with approximately 5 times higher flow at the inlet compared to the other precipitations with this device; means that the inlet stream has a total flow rate of 10 L/min. The gas stream was mixed with the recirculated reaction bed (116 mL/min) by the device (Z20) with the static mixer. The flow through the ejector orifice reaches a Reynolds number of 85329, confirming that it operates in a completely turbulent regime. This value has been determined by considering the properties of the fluid, the geometry of the orifice and the velocity of the flow at that point. When the gas began to bubble, a mixture composed of 0.5 kg of sodium aluminate (Al₂O₃/Na₂O R_{wt} = 1.23) and 1 litre of distilled water was added. The flow rate of the solution was variably adjusted to form a precipitation bed, maintaining a constant pH = 8.5. The precipitation process ended after 530 minutes, reaching a final temperature of 26 °C. The resulting suspension was filtered and washed with distilled water until a conductivity of less than 500 µS/cm was achieved in the wash water. The obtained solid was dried in the oven at 40°C for 15 hours. The solid was ground with a mortar and the obtained powder was characterized following Example 1. The results are shown in Table 16.

**Table 16: Characterization of the solid obtained in Example 15**

| | Al(OH)₃ (s) |
|---|---|
| BET Area (m²/g) | 184 |
| *Al₂O₃* % | 48 |
| Na⁺ (ppm) | 45343 |
| pH (10%) | 8.93 |
| Conductivity (10%) (µS/cm) | 186 |

This new device allows working at higher flows and with gas mixtures where CO₂ is not pure, allowing gas streams from other combustion processes in an industrial plant to be reused.

The high percentage of sodium in the solid could be due to the long precipitation time. However, the proposed experimental system makes it possible to obtain amorphous aluminium hydroxide with 4.5% Na⁺, even if a gaseous stream with only 10% CO₂ by volume is used.

### Example 16: Venturi Ejector and Static Mixer VII Procedure

Precipitation was carried out in a 5-litre tank, where 2 kg of distilled *H*₂*O* was added, and brought to 25 °C with constant stirring of 600 rpm. The gas stream with a constant flow rate was added along with the recirculated mixture from the reaction tank through the device (Z20) with the static mixer. The gas stream was composed of 80% compressed air (stream 1) and 20% pure CO₂ (stream 2); and in the same way as Example 15 the total stream is approximately 5 times higher than those described above. At the same time, a solution of sodium aluminate (Al₂O₃/Na₂O R_{wt} = 1.23) was added to the reaction tank with a flow rate dependent on the precipitation pH. In this case, precipitation was carried out at pH 8.5 for 253 minutes, adding a total of 0.5 kg of sodium aluminate and 1 litre of distilled water. The final suspension was filtered and washed with distilled water until a conductivity of less than 500 µS/cm was achieved in the washing water. The obtained solid was dried in the oven at 40°C for 15 hours. The dry solid was ground with a mortar to a fine powder and was characterized according to the results of Table 17.

**Table 17: Characterization of the solid obtained in Example 16**

| | Al(OH)₃ (s) |
|---|---|
| BET Area (m²/g) | 189 |
| *Al₂O₃* % | 49 |
| Na⁺ (ppm) | 32291 |
| pH (10%) | 8.91 |
| Conductivity (10%) (µS/cm) | 1038 |

With 20% CO₂ present in the total gaseous stream, the results of Example 15 are improved. Despite the 253 minutes of precipitation, there is hardly any dawsonite (quantified by XRD) compared to that described in the literature for such high reaction times. The rest of the characterization does not show great differences with respect to other solids obtained in the other examples.

## Claims

1. A process of obtention of aluminium hydroxide, comprising a simultaneous addition of CO₂ and an aqueous solution of a metal aluminate in a reactor with mechanical stirring and at a constant reaction pH between 7.5 and 9.

2. The process of claim 1, wherein said metal aluminate is sodium aluminate.

3. The process of claim 2, wherein said sodium aluminate solution contains an Al₂O₃/Na₂O ratio between 1 and 1.5.

4. The process of any one of claims 1 to 3, wherein said addition of CO₂ is made at a flow rate between 10 and 170 m/s.

5. The process of claim 4, wherein said flow rate is between 52 and 154 m/s.

6. The process of claim 5, wherein said flow rate is between 97 and 154 m/s.

7. The process of any one of claims 1 to 6, wherein said addition of CO₂ is made by a Venturi ejector fed from a stream of liquid taken from the reaction tank.

8. The process of any one of claims 1 to 6, wherein said addition of CO₂ is made by a Venturi ejector fed from a stream of the aqueous solution of metal aluminate.

9. The process of any one of claims 1 to 8, wherein said reactor comprises a static mixer.

10. The process of any one of claims 1 to 9, wherein said constant pH is 8 or 8.5.

11. The procedure of any one of claims 1 to 10, wherein said reaction takes place at a temperature between 10 °C and 40 °C.

12. The process of claim 11, wherein said temperature is between 16-40 °C.

13. The process of claim 12, whereby said temperature is between 16-27 °C.

14. The process of claim 1, wherein said addition of CO₂ is made at a flow rate of between 97 and 154 m/s, the reactor comprises a static mixer, the constant pH is 8 or 8.5, and said reaction takes place at a temperature of between 16 and 27 °C.

15. The process of any one of claims 1 to 14, wherein said reaction is carried out in a closed container with recirculation of a surplus amount of CO₂.
